(19) Europäisches Patentamt
European Patent Office
Office européen des brevets

(11) **EP 4 663 418 A1**

(12) **EUROPEAN PATENT APPLICATION**
published in accordance with Art. 153(4) EPC

(43) Date of publication:
**17.12.2025 Bulletin 2025/51**

(21) Application number: **24780954.4**

(22) Date of filing: **16.05.2024**

(51) International Patent Classification (IPC):
*B41J 2/19* (2006.01)   *B01D 19/00* (2006.01)
*B41J 2/01* (2006.01)   *B41J 2/18* (2006.01)
*B41J 2/175* (2006.01)

(52) Cooperative Patent Classification (CPC):
**B01D 19/00; B41J 2/01; B41J 2/175; B41J 2/18; B41J 2/19**

(86) International application number:
**PCT/JP2024/018074**

(87) International publication number:
**WO 2024/204862 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023   JP 2023053975**

(71) Applicant: **KYOCERA Document Solutions Inc.**
**Osaka-shi, Osaka 540-8585 (JP)**

(72) Inventor: **SAKAOKA, Shinya**
**Osaka-shi, Osaka 540-8585 (JP)**

(74) Representative: **Kurig, Thomas**
**Becker Kurig & Partner**
**Patentanwälte mbB**
**Bavariastraße 7**
**80336 München (DE)**

(54) **DEAERATION DEVICE AND INKJET RECORDING DEVICE**

(57)    A degassing device (40) removes air dissolved in a liquid under a reduced pressure atmosphere. The degassing device (40) includes a liquid tank (32) in which the liquid is stored; a pressure reducing device (62) which reduces pressure in the liquid tank (32); a circulation flow path (47) which connects different positions of the liquid tank (32); a circulation device (67) which circulates the liquid through the circulation flow path (47); and a control device (38) which controls a circulation operation by the circulation device (67). The control device (38) adjusts a circulation time of the liquid based on an amount of dissolved air in the liquid.

FIG. 2

EP 4 663 418 A1

**Description**

[Technical Field]

The present invention relates to a degassing device and an inkjet recording apparatus.

[Background]

In an inkjet recording apparatus, an ink droplet is ejected through a nozzle of a recording head, if bubbles are included in the ink, the nozzle of the recording head may be clogged. Therefore, it is desired to suppress an amount of dissolved air in the ink, and a degassing device for removing the air dissolved in the ink has been studied. For example, a degassing device that stirs the ink while the inside of an ink tank is reduced in pressure is known (for example, see Patent documents 1 and 2). In the degassing device described in Patent documents 1 and 2, a magnetic force is applied to a stirrer in the ink tank from the outside, and the stirrer is rotated by the magnetic force to stir the ink in the ink tank.

[Prior art documents]

[Patent Document]

Patent Document 1: Japanese Patent Publication No.5030305

Patent Document 2: Japanese Patent Laid-Open No. 2019-142189

[Summary of the invention]

[Problems to be solved by invention]

In the degassing device described in Patent documents 1 and 2, the ink in the ink tank is stirred, and the ink is degassed near the liquid surface. However, since the stirrer is located at the bottom of the ink tank, when an ink capacity increases, it becomes difficult to replace the ink near the liquid surface where the amount of dissolved gas is small with the ink near the bottom surface where the amount of dissolved gas is large. Further, since the amount of dissolved air in the ink varies in accordance with the surrounding environment, there is a possibility that the degassing of the ink is insufficient or excessive at a fixed degassing time. Further, when the above-described degassing device is used for degassing liquids other than the ink, similar problems occur.
Accordingly, it is an object of the present invention to improve the degassing efficiency of the degassing device with a simple configuration and performing the degassing without excess and deficiency even if the liquid capacity is large.

[Means of Solving the Problems]

A degassing device according to the present invention removes air dissolved in a liquid under a reduced pressure atmosphere. The degassing device includes a liquid tank in which the liquid is stored; a pressure reducing device which reduces pressure in the liquid tank; a circulation flow path which connects different positions of the liquid tank; a circulation device which circulates the liquid through the circulation flow path; and a control device which controls a circulation operation by the circulation device. The control device adjusts a circulation time of the liquid based on an amount of dissolved air in the liquid.
An inkjet recording apparatus according to the present invention includes the degassing device according; and an inkjet head which ejects a degassed ink as the liquid on a sheet.

[Effects of the Invention]

According to the structure of the present invention, the air dissolved in the liquid near the liquid surface exposed to the reduced pressure atmosphere is removed. The liquid in the liquid tank is circulated through the circulation flow path, and the liquid near the liquid surface where an amount of dissolved air is small is replaced with the liquid near the bottom surface where an amount of dissolved air is larger, and an effective degassing is performed. Further, even if an amount of the dissolved air in the liquid is varied, a circulation time of the liquid is adjusted depending on the amount of dissolved air so that the degassing can be performed without excess and deficiency.

[Brief Description of Drawings]

[FIG. 1] FIG. 1 is a schematic view showing an inkjet recording apparatus according to a first embodiment.

[FIG. 2] FIG. 2 is a schematic view showing an ink supply structure according to the first embodiment.

[FIG. 3] FIG. 3 is a graph showing a relationship between a pressure reducing condition and an oxygen saturation of ink.

[FIG. 4] FIG. 4 is a view showing an example of degassing operation of a circulation degassing system according to the first embodiment.

[FIG. 5] FIG. 5 is a view showing an example of degassing operation of a stirring degassing system according to the comparative embodiment.

[FIG. 6] FIG. 6 is a graph showing an oxygen saturation in the circulation degassing system and the stirring degassing system.

[FIG. 7] FIG. 7 is a flowchart showing an adjustment process of a circulation time in the first embodiment.

[FIG. 8] FIG. 8 is a view showing a relationship between the oxygen saturation and the circulation time in the first embodiment.

[FIG. 9] FIG. 9 is a schematic view showing the ink supply structure in a second embodiment.

[Embodiment for carrying out the Invention]

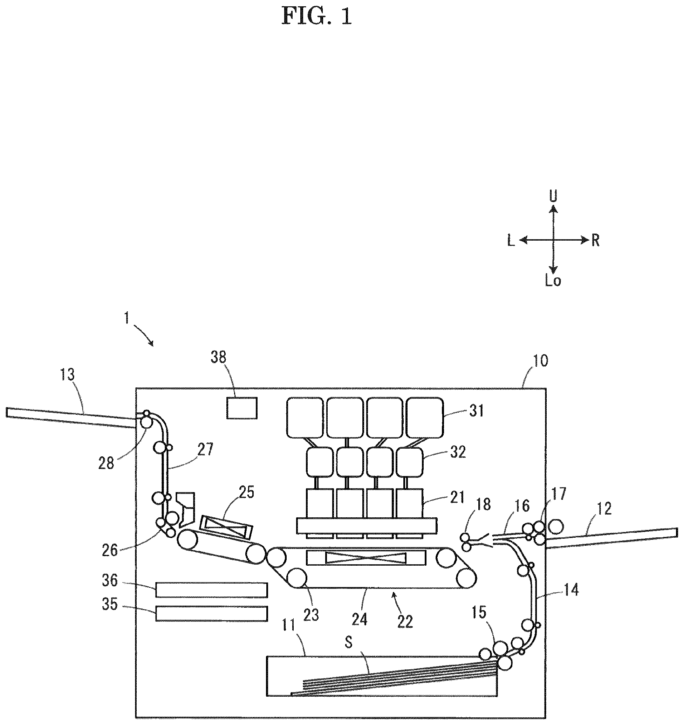

<First Embodiment> Hereinafter, with reference to the drawings, an inkjet recording apparatus 1 of the present embodiment will be described. FIG. 1 is a schematic view showing the inkjet recording apparatus 1 according to the present embodiment. For convenience of explanation, the front side of the paper surface on which FIG. 1 is drawn is defined as the front side of the inkjet recording apparatus 1, and the left- and-right direction will be described with reference to the direction in which the inkjet recording apparatus 1 is viewed from the front side. The arrows L, R, U, and Lo attached to each figure indicate the left, right, upper, and lower sides of the inkjet recording apparatus 1, respectively.

As shown in FIG. 1, the inkjet recording apparatus 1 is formed so as to perform printing by ejecting ink from each inkjet recording head 21 toward a sheet S as a recording medium. The inkjet recording apparatus 1 includes a box-shaped housing 10 in which various devices are housed. A sheet feeding cassette 11 in which the sheet S is set is housed in the lower portion of the housing 10, and a manual sheet feeding tray 12 on which the sheet S is set by hand is installed on the right side surface of the housing 10. On the upper portion of the left side surface of the housing 10, a sheet discharge tray 13 on which the recorded sheet S is loaded is installed.

In the right side portion in the housing 10, a first conveyance path 14 along which the sheet S is conveyed from the sheet feeding cassette 11 to the recording head 21 provided in the center of the housing 10 is formed. On the upstream side of the first conveyance path 14, a first sheet feeding part 15 which feeds the sheet S from the sheet bundle in the sheet feeding cassette 11 is provided, and a pair of registration rollers 18 which adjusts a feeding timing of the sheet S is provided in the downstream portion of the first conveyance path 14. Further, a sheet feeding path 16 extending from the manual sheet feeding tray 12 is merged with the downstream portion of the first conveyance path 14, and a second sheet feeding part 17 which feeds the sheet S from the sheet bundle on the manual sheet feeding tray 12 is provided on the sheet feeding path 16.

On the downstream side of the pair of registration rollers 18, a conveying device 22 and the recording head 21 provided for each color (for example, black, cyan, magenta, and yellow) are installed. The pair of registration rollers 18 corrects the skew of the sheet S, and then sends the sheet S to the conveying device 22 in accordance with an ink ejecting operation by each recording head 21. In the housing 10, an ink container 31 and an ink tank 32 are provided for each recording head 21. The ink of each ink container 31 is temporarily stored in the ink tank 32, the ink is degassed as necessary, and then the ink is supplied from the ink tank 32 to the recording head 21.

The conveying device 22 is constituted by winding a conveyance belt 24 around a plurality of tension rollers 23 installed below the recording heads 21. On the downstream side of the conveying device 22, a drying device 25 which dries the ink on the sheet S is provided. On the downstream side of the drying device 25, a decurl device 26 which corrects a curl generated on the sheet S by drying the ink is provided. On the downstream side of the decurl device 26, a second conveyance path 27 along which the sheet S is conveyed toward the sheet discharge tray 13 is formed. In the downstream portion of the second conveyance path 27, a sheet discharge part 28 which discharges the recorded sheet S to the sheet discharge tray 13 is provided.

Below the drying device 25, a maintenance unit 35 which cleans the recording heads 21 and a cap unit 36 which caps the recording heads 21 are provided. The maintenance unit 35 is provided with a squeegee-shaped wiping blade, and the wiping blade scrapes the ink remaining on the nozzle surface of the recording head 21. The cap unit 36 is provided with a head cap, and the nozzle surface of the recording head 21 is capped with the head cap. The head cap suppresses drying of the ink in the nozzle. The drying of the ink in the nozzle may be further suppressed by storing a liquid such as a cleaning liquid in the head cap.

Further, the inkjet recording apparatus 1 is provided with a control device 38 for controlling the entire apparatus. The control device 38 may be constituted by a processor or a logic circuit (hardware) formed in an integrated circuit or the like. In the case of a processor, the processor reads and executes a program stored in a memory, and various processes are executed. For example, a CPU (Central Processing Unit) is used as the processor. The memory is constituted by one or more storage devices such as a ROM (Read Only Memory), a RAM (Random Access Memory) or the like depending on the application.

At the time of image recording, the sheet S is fed from the sheet feeding cassette 11 or the manual sheet feeding tray 12 by the first sheet feeding part 15 or the second sheet feeding part 17, respectively, and then sent to the pair of registration rollers 18. In accordance with the ejecting timing of the ink, the sheet S is conveyed from the pair of registration rollers 18 to the conveyance belt 24, the degassed ink is ejected from each recording head 21, and a color image is recorded on the surface of the sheet S. The sheet S is dried by the drying device 25, and the curl of the sheet S is corrected by the decurl device 26. The sheet S is conveyed to the sheet discharge part 28 through the second conveyance path 27, and the recorded sheet S is discharged to the sheet discharge tray 13 by the sheet discharge part 28.

By the way, in a machine such as an on-demand machine in which an amount of the ink used is small, the liquid surface of the ink comes into contact with air in the ink tank 32, and the dissolving of the air proceeds, and the nozzle of the recording head 21 may be clogged by bubbles in the ink. Therefore, it is desired to appropriately keep an amount of dissolved gas in the ink. For example, a method has been proposed in which by passing the ink through the hollow fiver filter in a state where the pressure of the circumference of the hollow fiber filter is reduced, the air is moved from the wall surface of the hollow fiber to the pressure decreased side to degas the ink. This method requires the expensive hollow fiber filter and requires periodic replacement operations, which increase cost.

In order to prevent the clogging of the nozzle, a system (hereinafter referred to as a stirring degassing system) has been proposed in which the ink is stirred by a stirrer in a state in which the pressure in the ink tank 32 is reduced below an atmospheric pressure to degas the ink. In the stirring degassing system, a magnetic force is applied to the stirrer in the ink tank from the outside, and the stirrer is rotated by the magnetic force to stir the ink in the ink tank. When the depth of the ink and the tank diameter are large, the ink is difficult to be stirred, and the degassing efficiency is lowered. As the rotational speed of the stirrer is increased, the ink is easily stirred, but when the rotational speed of the stirrer becomes too high, a loss of synchronization occurs and the rotational sound of the stirrer becomes large.

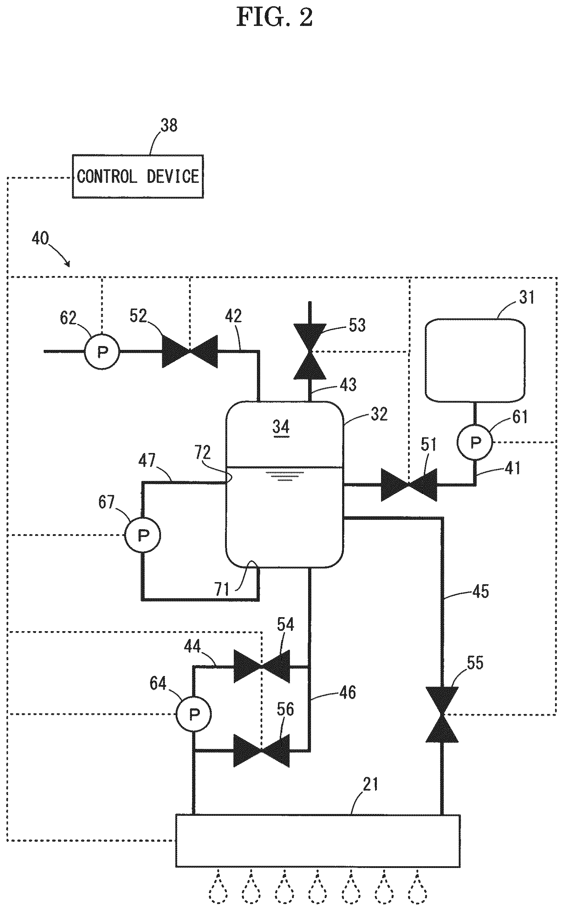

Therefore, in a first embodiment, a system (hereinafter referred to as a circulation degassing system) is adopted in which the ink in the ink tank 32 is circulated through a circulation flow path 47 and degassed while the pressure in the ink tank 32 is reduced to an atmospheric pressure or lower (see FIG. 2). In the circulation degassing system, since the ink circulates in the circulation flow path 47 and the ink tank 32, the ink near the liquid surface where an amount of dissolved air is small is replaced with the ink near the bottom surface where an amount of dissolved air is large, thereby improving the degassing efficiency. Unlike the stirring degassing system, it is not affected by the depth of the ink or the tank diameter, and the driving sound of the circulation pump is suppressed rather than the rotational sound of the stirrer, thereby improving the quietness.

Generally, the recording head 21 may be included in the circulation flow path of the circulation degassing system, but in this embodiment, the recording head 21 is not included in the circulation flow path 47. That is, the circulation flow path 47 is a dedicated flow path for degassing provided separately from the flow path for supplying the ink to the recording head 21. Since the recording head 21 is not included in the circulation flow path 47, the possibility that the meniscus formed in the nozzle of the recording head 21 is destroyed by the pressure reduction at the time of degassing and the outside air enters the recording head 21 can be reduced.

The amount of dissolved air in the ink varies according to the surrounding environment. For example, the amount of dissolved air in the ink depends on environmental temperature and atmospheric pressure. Since the ink tank 32 is filled with the degassed ink, the amount of dissolved air is small immediately after the ink tank 32 is filled with the ink. Further, in a case where a printing density is high and the frequency of ink replacement in the ink tank 32 increases, the amount of dissolved air is small. In these cases, if the circulation time of the ink is too long relative to the amount of dissolved air in the ink, there is a problem that the waiting time until the printing is prolonged. Therefore, in the first embodiment, the circulation time of the ink is adjusted according to the amount of dissolved air in the ink.

With reference to FIG. 2, a degassing device 40 according to the present embodiment will be described. FIG. 2 is a schematic view showing an ink supply structure of this embodiment. The inkjet recording apparatus of the present embodiment is provided with the ink supply structure for each color, and one ink supply structure will be described below.

As shown in FIG. 2, the ink supplied from the ink container 31 through a replenishment flow path 41 is stored in the ink tank 32. A replenishment pump 61 and a replenishment valve 51 are provided on the replenishment flow path 41, and a replenishment of the ink to the ink tank 32 is controlled by the replenishment pump 61 and the replenishment valve 51. An upper space 34 of the ink tank 32 is connected to a reduced-pressure flow path 42 and an atmosphere opening flow path 43. A pressure reducing pump (a pressure reducing device) 62 and a pressure reducing valve 52 are provided on the reduced-pressure flow path 42, and the pressure in the ink tank 32 is reduced by the pressure reducing pump 62 and the pressure reducing valve 52. An atmosphere opening valve 53 is provided on the atmosphere opening flow path 43, and the upper space 34 is opened to the atmosphere by the atmosphere opening valve 53.

The ink is supplied from the ink tank 32 to the recording head 21 through a supply flow path 44, and the ink is recovered from the recording head 21 to the ink tank 32 through a recovery flow path 45. A supply pump 64 and a supply valve 54 are provided on the supply flow path 44, and a recovery valve 55 is provided on the recovery flow path 45. An ink replacement operation and a bubble removal operation in the recording head 21 are controlled by the supply pump 64, the supply valve 54 and the recovery valve 55. The supply flow path 44 is connected to a bypass flow path 46 bypassing the supply pump 64, and the bypass flow path 46 is provided with a bypass valve 56. During printing, the ink is passed through the bypass flow path 46 by the bypass valve 56.

The vicinity of the liquid surface of the ink and the vicinity of the bottom surface of the ink tank 32 are connected to each other by the circulation flow path 47. On the circulation flow path 47, a circulation pump (a circulation device) 67 is provided, and the ink is circulated through the circulation flow path 47 by the circulation pump 67. An inflow port 72 from the circulation flow path 47 to the ink tank 32 is higher than an outflow port 71 from the ink tank 32 to the circulation flow path 47. Specifically, the outflow port 71 is opened to the bottom surface of the ink tank 32, and the inflow port 72 is opened to the side surface near the liquid surface of the ink tank 32. The pumps 61, 62, 64, and 67 and the valves 51 to 56 are controlled by the control device 38.

The control device 38 controls the circulation operation by the circulation pump 67 so that a circulation time of the ink is adjusted depending on the amount of dissolved air in the ink. In the first embodiment, the amount of dissolved air in the liquid is predicted based on the operating environment, and the circulation time of the liquid is adjusted according to the predicted value of the amount of dissolved air in the liquid. The details of the ink circulation time adjustment process by the control device 38 will be described later. In the ink supply structure of the inkjet recording apparatus 1, the degassing device 40 is formed by the ink tank 32, the reduced-pressure flow path 42, the pressure reducing pump 62, the pressure reducing valve 52, the circulation flow path 47, the circulation pump 67, the control device 38, and the others.

In the standby state of the inkjet recording apparatus 1, the replenishment valve 51, the pressure reducing valve 52, and the supply valve 54 are closed, and the atmosphere opening valve 53, the bypass valve 56, and the recovery valve 55 are opened. The ink is stored in the ink tank 32, and the liquid surface comes into contact with the air in the upper space 34 which is opened to the atmosphere, the air is dissolved in the ink with the passage of time. In the pressure reducing operation, only the pressure reducing valve 52 is opened, and the other valves 51, 53 to 56 are closed. The pressure reducing pump 62 is driven to draw the air from the upper space 34 in the ink tank 32. When the pressure in the inside of the ink tank 32 reaches the target pressure (for example, -50 [kPa]), the pressure reducing pump 62 is stopped.

In the degassing operation, all the valves 51 to 56 are closed, and the circulation pump 67 is driven while the reduced-pressure state in the ink tank 32 is maintained, and the ink in the ink tank 32 is circulated through the circulation flow path 47. The ink near the bottom surface of the ink tank 32 where an amount of dissolved air is large flows out to the circulation flow path 47 through the outflow port 71, and the ink in the circulation flow path 47 flows into the vicinity of the liquid surface in the ink tank 32 through the inflow port 72. The liquid surface of the ink is exposed to the reduced pressure atmosphere to remove the air dissolved in the ink near the liquid surface. The ink near the liquid surface where an amount of dissolved air is small is smoothly replaced with the ink near the bottom surface where an amount of dissolved air is large, and the degassing efficiency is improved.

During the ink replacement operation in the recording head 21, the replenishment valve 51, the pressure reducing valve 52, and the bypass valve 56 are closed, and the atmosphere opening valve 53, the supply valve 54, and the recovery valve 55 are opened. The supply pump 64 is driven to supply the ink from the ink tank 32 to the recording head 21 through the supply flow path 44, and the ink is recovered from the recording head 21 to the ink tank 32 through the recovery flow path 45. By circulating the ink between the recording head 21 and the ink tank 32, the ink having an increased viscosity in the recording head 21 is replaced, and bubbles are removed from the recording head 21.

During the printing operation by the recording head 21, the replenishment valve 51, the pressure reducing valve 52, and the supply valve 54 are closed, and the atmosphere opening valve 53, the bypass valve 56, and the recovery valve 55 are opened. That is, during the printing operation, the ink tank 32 is released to the atmosphere and has the atmospheric pressure. During the printing operation, the pressure in the ink tank 32 is not reduced such that substantial degassing does not occur. Every time when the ink is ejected from the recording head 21, the ink is supplied from the ink tank 32 to the recording head 21 through the bypass flow path 46 and the recovery flow path 45. In some cases, the ink is replenished in the middle of the ink replacement operation, printing operation, or the like. During the ink replenishment operation, the replenishment valve 51 is opened and the replenishment pump 61 is driven. The ink is replenished from the ink container 31 to the ink tank 32 through the replenishment flow path 41 by driving the replenishment pump 61.

FIG. 1 and the others are schematically drawn, and the recording head 21 is actually disposed above the ink tank 32. A negative pressure is applied to the ink in the recording head 21 by a head difference from the ink in the ink tank 32, and a meniscus is formed in the nozzle of the recording head 21 by the negative pressure. After the ink is ejected from the recording head 21, the surface tension of the ink acts to reduce the surface area of the meniscus, and the resulting negative pressure draws the reduced amount of the ink from the ink tank 32 into the recording head 21. The recovery valve 55 may be closed, and the ink may be supplied to the recording head 21 only from the bypass flow path 46.

If the pressure in the ink tank 32 is reduced to the extent that substantial degassing occurs in a state where the recording head 21 and the ink tank 32 are connected, the meniscus of the nozzle may be destroyed. Even if the meniscus is not destroyed, there is a risk that the shape of the meniscus in the nozzle is changed compared with the case where the ink tank 32 is released to the atmosphere, and the ejecting characteristics of the ink is changed. In the present embodiment, since the pressure in the ink tank 32 is not reduced so as not to cause substantial degassing during the printing operation, the meniscus in the nozzle of the recording head 21 is not destroyed, and since its shape is not changed, the ejection characteristic is not changed.

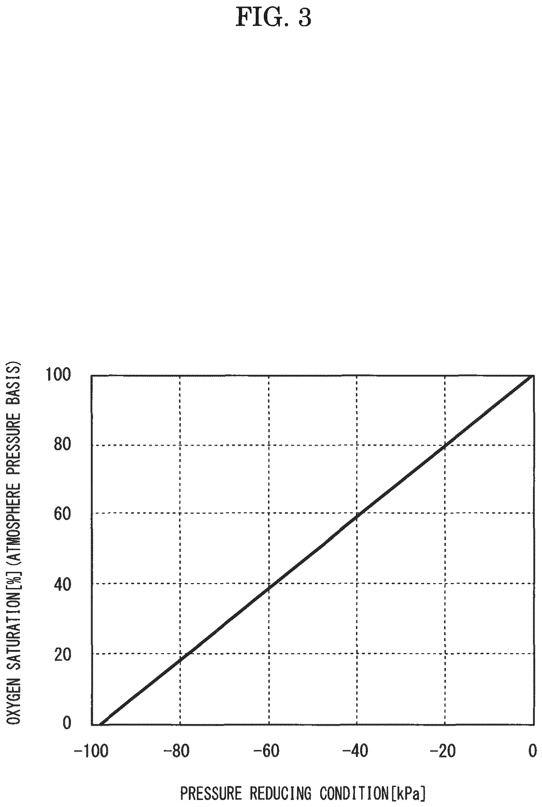

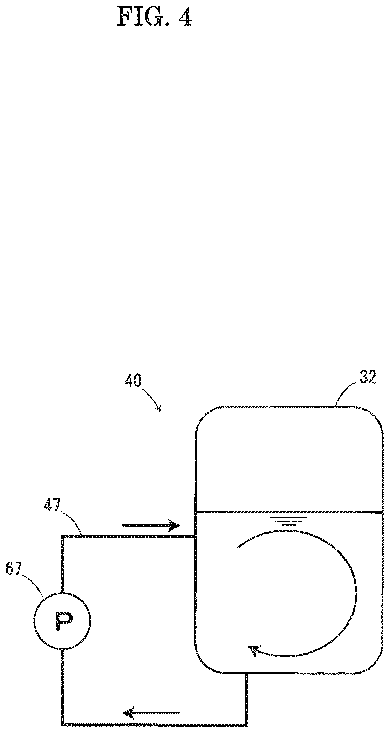

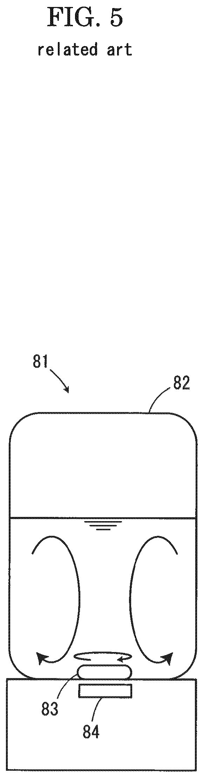

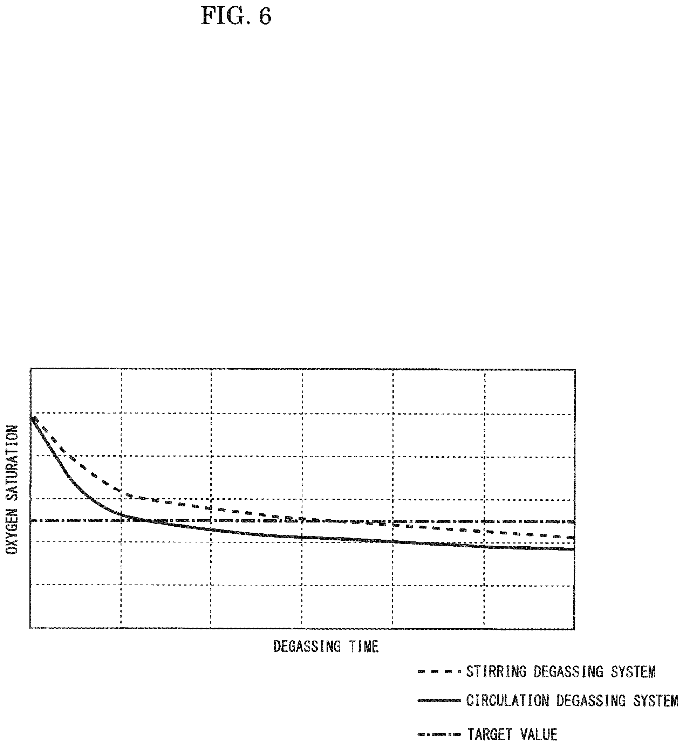

With reference to FIG. 3 to FIG. 6, a degassing performance of the circulation degassing system and the stirring degassing system will be described. FIG. 3 is a graph showing a relationship between a pressure reducing condition and an oxygen saturation of the ink. FIG. 4 is a view showing an example of degassing operation of the circulation degassing system. FIG. 5 is a view showing an example of degassing operation of the stirring degassing system. FIG. 6 is a graph showing the oxygen saturation of the circulation degassing system and the stirring degassing system.

The above-described degassing device 40 employs a reduced-pressure degassing system in which the inside of the ink tank 32 is reduced in pressure to remove air. In the reduced-pressure degassing system, an amount of dissolved air in the liquid converges to a saturated amount of dissolved air according to environmental conditions such as atmospheric pressure and liquid temperature, and the amount of dissolved air decreases when the atmospheric pressure is reduced or the temperature increases. In many cases, an amount of dissolved oxygen is used instead of the amount of dissolved air, and in the following description, the degassing performance is explained by using the oxygen saturation obtained from the following equation (1). As shown in FIG. 3, the oxygen saturation decreases with the pressure reducing, but it is necessary to carry the ink to the liquid surface exposed to the reduced pressure atmosphere.

An oxygen saturation = an amount of dissolved oxygen/an amount of saturated dissolved oxygen at atmospheric pressure $\times$ 100.    Equation (1)

As shown in FIG. 4, in the degassing device 40 of the circulation degassing system, the air dissolved in the ink is removed near the liquid surface of the reduced pressure ink tank 32, so that the oxygen saturation of the ink near the liquid surface is low and the oxygen saturation of the ink near the bottom surface is high. By driving the circulation pump 67, the ink near the bottom surface is sent to the vicinity of the liquid surface through the circulation flow path 47, so that a flow of the ink is formed between the vicinity of the liquid surface and the vicinity of the bottom surface. In the circulation degassing system, the ink near the bottom surface is surely sent to the vicinity of the liquid surface, so that the ink having a high oxygen saturation is exposed to the reduced pressure atmosphere and the degassing efficiency is improved.

On the other hand, as shown in FIG. 5, in the degassing device 81 of the stirring degassing system, a stirrer 83 is placed on the bottom surface of the reduced pressure ink tank 82. A magnet 84 is provided below the ink tank 82, and the stirrer 83 is rotated by the magnetic force of the magnet 84 to stir the ink. By stirring the ink, the ink near the bottom surface is carried near the liquid surface. However, in the stirring degassing system, the stirrer 83 is placed at the center of the bottom surface of the ink tank 82, and the influence of stirring is strong at the center of the bottom surface, but is weakened near the liquid surface and the periphery. Therefore, the ink near the bottom surface hardly reaches the vicinity of the liquid surface, resulting in lowering the degassing efficiency.

FIG. 6 shows changes in the oxygen saturation with time from the start of degassing in the circulation degassing system and the stirring degassing system. In FIG. 6, the circulation degassing system degassing device is used in which the bottom surface of the ink tank and the side surface near the liquid surface are connected by the circulation flow path. In the circulation degassing system, the oxygen saturation is lowered below the target value in a short time from the start of degassing. On the other hand, in the stirring degassing system, the oxygen saturation is not lowered below the target value within a short time after the start of degassing, and it takes a considerable time for the oxygen saturation to be lowered below the target value. As described above, in the circulation degassing system in which the replacement of the ink near the liquid surface and the ink near the bottom surface is promoted, the oxygen saturation is lowered in a shorter time than in the stirring degassing system.

In the circulation degassing system, if the oxygen saturation (the amount of dissolved air) in the ink is low, the amount of dissolved oxygen to be removed from the ink is small. Therefore, depending on the oxygen saturation in the ink, it is possible to shorten the circulation time of the ink during the degassing operation or to omit the degassing operation of the ink. As described above, the oxygen saturation in the ink is predicted based on the operating environment by the control device 38, and the circulation time of the ink by the circulation pump 67 is appropriately adjusted according to the operating environment without actually measuring the oxygen saturation in the ink. When the predicted value of the oxygen saturation in the ink becomes low, the circulation time of the ink is adjusted to be short, and excessive degassing of the ink is suppressed, and the degassing of the ink can be finished in a short time.

The oxygen saturation in the ink is predicted based on at least one of environmental temperature, environmental air pressure, elapsed time after filling the ink tank 32 with the ink, and printing density as the operating environment. The oxygen saturation can be predicted by using the characteristics of the oxygen saturation, the standing time of the ink, the frequency of replacement of the ink, or the like. For example, the oxygen saturation in the ink has a characteristic depending on the environmental temperature or the environmental air pressure. Therefore, it can be predicted that the oxygen saturation in the ink becomes lower as the environmental temperature or the environmental air pressure becomes lower. The environmental temperature and the environmental air pressure are the temperature and atmospheric pressure around the place where the degassing device 40 is installed.

The ink tank 32 is filled with the degassed ink from the ink container 31. The shorter the elapsed time after the ink filling, the smaller the amount of air dissolved in the ink. Therefore, it can be predicted that the oxygen saturation becomes lower as the elapsed time after the filling the ink tank 32 with the ink becomes shorter. Further, as the printing density increases, the ink in the ink tank 32 is frequently replaced. Since the ink in the ink tank 32 is replaced with the degassed ink, it can be predicted that the oxygen saturation is lower as the printing density is higher.

In this case, the inkjet recording apparatus 1 is provided with various sensors for detecting the environmental temperature and the environmental air pressure, and the elapsed time after the ink filling and the printing density during printing are managed by the control device 38. The control device 38 also stores conversion information indicating the correspondence between each parameter such as the environmental temperature and the oxygen saturation. Map data, a lookup table, a conversion formula, or the like are used as the conversion information indicating the correspondence relationship between each parameter and the oxygen saturation. These map data, lookup tables, and conversion formulas are obtained experimentally, empirically, and theoretically in advance.

The oxygen saturation is predicted from each parameter by the control device 38, and the circulation time of the ink is adjusted from the predicted value of the oxygen saturation. Here, by using a first threshold value and a second threshold value larger than the first threshold value, the predicted value of the oxygen saturation is compared with the first and second threshold values, and the circulation time of the ink by the circulation pump 67 is adjusted in three stages. Incidentally, the circulation time of the ink is 0 (zero) seconds or longer, and when the circulation time of the ink is adjusted to 0 seconds, the ink is not circulated by the circulation pump 67. Here, the target value of the oxygen saturation (see FIG. 6) is set for the first threshold value, and a value higher than the target value is set for the second threshold value.

If the predicted value of the oxygen saturation in the ink is equal to or larger than the second threshold value, it is determined that the oxygen saturation in the ink is sufficiently higher than the target value, and the ink is degassed over a long time until the oxygen saturation is lowered below the target value. Thus, clogging of the nozzle of the recording head 21 is suppressed and the image quality is improved. If the predicted value of the oxygen saturation in the ink is equal to or larger than the first threshold value and less than the second threshold value, it is determined that the oxygen saturation in the ink is slightly higher than the target value, and the ink is degassed in a short time until the oxygen saturation is lowered below the target value. By shortening the time required for the degassing operation, the waiting time until printing is shortened.

If the predicted value of the oxygen saturation in the ink is less than the first threshold value, it is determined that the oxygen saturation in the ink is less than the target value, and the degassing operation is not performed. The degassing operation is omitted, and the waiting time until printing is further shortened. In this way, if the predicted value of the oxygen saturation is sufficiently high, the circulation time of the ink is set to be longer, and the degassing operation is performed mainly. If the predicted value of the oxygen saturation is slightly higher, the circulation time of the ink is set to be shorter, and the degassing operation is simply performed. If the predicted value of the oxygen saturation is sufficiently low, the circulation time of the ink is set to 0 seconds and the degassing operation is not performed.

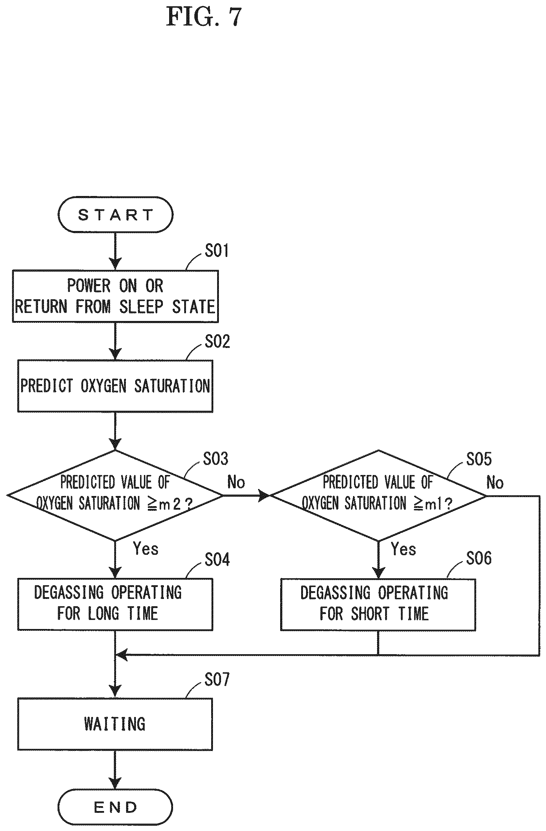

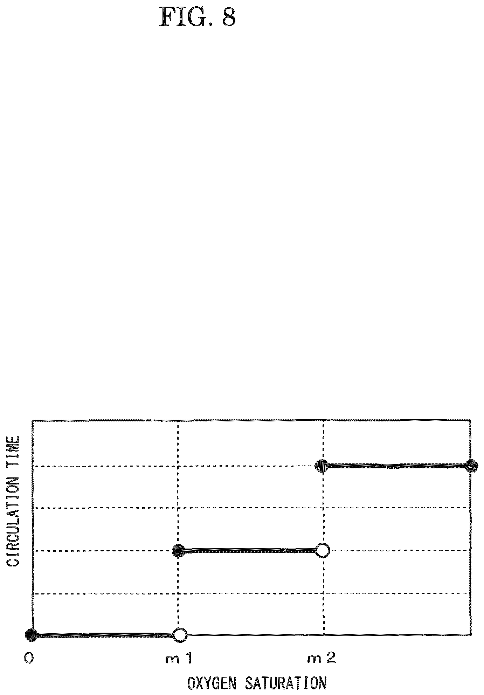

With reference to FIG. 7 and FIG. 8, the circulation time adjustment process will be described. FIG. 7 is a flowchart showing the circulation time adjustment process according to the first embodiment. FIG. 8 is a view showing the relationship between the oxygen saturation and the circulation time of the first embodiment. Here, the reference numerals of FIG. 2 will be used as appropriate. The following flowchart is only an example, and may be modified as needed.

As shown in FIG. 7, when the power of the inkjet recording apparatus 1 is turned on or the inkjet recording apparatus 1 is returned from the sleep state (step S01), the control device 38 predicts the oxygen saturation in the ink based on the operating environment (step S02). As described above, the oxygen saturation in the ink is predicted based on at least one of the environmental temperature, the environmental air pressure, the elapsed time after the ink tank 32 is filled with the ink, and the printing density. Each parameter such as the environmental temperature and the like used for the prediction of the oxygen saturation may be suitably selected according to the condition of the inkjet recording apparatus 1.

Next, the control device 38 determines whether the predicted value of the oxygen saturation in the ink is equal to or larger than the second threshold value m2 (step S03). If the predicted value of the oxygen saturation in the ink is equal to or larger than the second threshold value m2 (Yes in step S03), the circulation time of the ink by the circulation pump 67 is set to be longer and the degassing operation is performed (step S04, see FIG. 8). The ink is surely degassed over a long time until the predicted value of the oxygen saturation in the ink is lowered below the target value. When the ink circulation time has elapsed and the degassing operation is completed, the inkjet recording apparatus 1 waits until a printing instruction is received (step S07).

If the predicted value of the oxygen saturation in the ink is less than the second threshold value m2 (No in step S03), the control device 38 determines whether the predicted value of the oxygen saturation in the ink is equal to or larger than the first threshold value m1 (step S05). If the predicted value of the oxygen saturation in the ink is equal to or larger than the first threshold value m1 (Yes in step S05), the circulation time of the ink by the circulation pump 67 is set to be short, and the degassing operation is performed (step S06, see FIG. 8). The ink is degassed in a short time until the predicted value of the oxygen saturation in the ink is lowered below the target value. When the ink circulation time has elapsed and the degassing operation is completed, the inkjet recording apparatus 1 waits until a printing instruction is received (step S07).

If the predicted value of the oxygen saturation in the ink is less than the first threshold value m1 (No in step S05), the circulation time of the ink by the circulation pump 67 is set to 0 seconds, and the degassing operation is not performed (see FIG. 8). Without performing the degassing operation, the inkjet recording apparatus 1 waits until a printing instruction is received (step S07). In the present embodiment, the circulation time of the ink is set gradually higher as the oxygen saturation increases by using the first and second thresholds m1 and m2, but the circulation time of the ink may be set continuously higher as the oxygen saturation increases.

As described above, according to the degassing device 40 of the first embodiment, the air dissolved in the ink near the liquid surface exposed to the reduced pressure atmosphere is removed. The ink in the ink tank 32 is circulated through the circulation channel 47, and the ink near the liquid surface where the oxygen saturation is low is replaced with the ink near the bottom surface where the oxygen saturation is high, and the effective degassing is performed. Further, even if the oxygen saturation in the ink changes, the circulation time of the ink is adjusted according to the oxygen saturation, so that the ink can be degassed without excess or deficiency.

Furthermore, when the degassing device 40 is used in the inkjet recording apparatus 1, clogging of the recording head 21 due to air bubbles in the ink is effectively suppressed, thereby improving the image quality. By adjusting the circulation time of the ink, the waiting time until printing can be shortened.

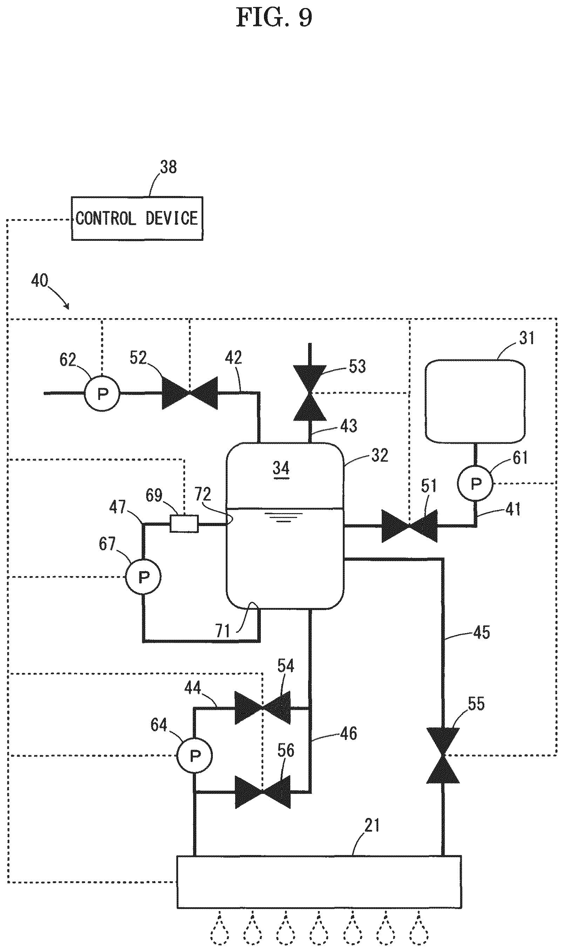

<Second Embodiment> Next, with reference to FIG. 9, the degassing device according to the second embodiment will be described. FIG. 9 is a schematic view showing the ink supply structure of the second embodiment. The second embodiment differs from the first embodiment in that the circulation time of the ink is adjusted according to the measured value of the oxygen saturation in the ink. Therefore, in the second embodiment, the same configuration as in the first embodiment is omitted. For convenience of explanation, the same names as those of the first embodiment are shown by the same reference numerals.

As shown in FIG. 9, in the circulation flow path 47 of the degassing device 40 according to the second embodiment, a bubble sensor (sensor) 69 is provided in addition to the circulation pump 67, and bubbles in the ink are measured by the bubble sensor 69. The measured value of the bubble sensor 69 is output to the control device 38, and the oxygen saturation in the ink is obtained from the measured value of the bubble sensor 69 by the control device 38. Thus, in the degassing device 40, the bubble sensor 69 is used as a sensor for actually measuring the oxygen saturation in the ink. The degassing device 40 may use an oxygen saturation sensor instead of the bubble sensor 69.

The oxygen saturation of the ink in the circulation flow path 47 has less unevenness than that in the ink tank 32. Therefore, the oxygen saturation in the ink is actually measured in the circulation flow path 47, thereby improving the measurement accuracy of the oxygen saturation. In the same manner as in the first embodiment, the control device 38 compares the measured value of the oxygen saturation with the first and second threshold values to adjust the circulation time of the ink in three stages. The actual measurement of the oxygen saturation in the ink may be performed when the inkjet recording apparatus 1 is turned on or when the inkjet recording apparatus 1 is returned from the sleep state, or may be performed after the inkjet recording apparatus 1 is left unattended for a long time.

As the bubble sensor 69, a photoelectric bubble sensor, a capacitance bubble sensor, an ultrasonic bubble sensor and the like are used. In the photoelectric bubble sensor, a light emitting element and a light receiving element are disposed across the circulation flow path 47, and the state of the bubble is detected from a change in an amount of received light passing through the ink. In the capacitance type bubble sensor, a detection electrode and an installation electrode are provided across the circulation flow path 47, and the state of the bubble is detected from a change in the capacitance generated between the two electrodes. In the ultrasonic bubble sensor, a pair of transducers are disposed across the circulation flow path 47, and the state of the bubble is detected from the change in the ultrasonic wave passing through the ink.

As described above, also in the degassing device 40 according to the second embodiment, the ink near the liquid surface where the oxygen saturation is low is replaced with the ink near the bottom surface where the oxygen saturation is high, and the effective degassing is performed. Further, even if the oxygen saturation in the ink changes, the circulation time of the ink is adjusted according to the oxygen saturation, so that the ink can be degassed without excess or deficiency.

In the above-described embodiments, the circulation time of the ink is adjusted according to the predicted value or the measured value of the oxygen saturation, but the circulation time of the ink may be adjusted using the predicted value or the measured value of the oxygen saturation. In this case, the control device predicts the oxygen saturation in the ink based on a coefficient corresponding to the operating environment, and adjusts the circulation time of the ink according to the predicted value of the oxygen saturation. The degassing device is provided with a sensor for measuring the oxygen saturation in the ink. The control device compares the predicted value of the oxygen saturation in the ink with the measured value, and corrects the coefficient for predicting the oxygen saturation in the ink.

For example, when the oxygen saturation is predicted from the environmental temperature or the like by a conversion equation showing the correspondence between the operating environment such as the environmental temperature and the oxygen saturation, the coefficient used in the conversion equation is corrected in consideration of the difference between the predicted value and the measured value of the oxygen saturation in the ink. Thus, the control device can predict a value close to the measured value of the oxygen saturation in the ink from the operating environment.

Although the degassing device provided in the inkjet recording apparatus has been exemplified in this embodiment, the degassing device can also be applied to apparatuses used in other fields such as semiconductor manufacturing fields and display manufacturing fields. That is, it can also be applicable to degassing liquids other than the ink, such as chemical liquids, electrolytic liquids, liquid resins, adhesives, solvents, lubricating oils, liquid foods, beauty solutions, and the like, other than ink.

In the present embodiment, the pressure reducing pump is exemplified as the pressure reducing device, but the pressure reducing device may be any device capable of pressure reducing the inside of the ink tank, for example, the pressure-reducing device may be an ejector.

In the present embodiment, the circulation pump is exemplified as the circulation device, but the circulation device may be any device capable of circulating the ink through the circulation flow path, for example, the circulation device may be an ejector.

In the present embodiment, the environmental temperature, the environmental air pressure, the elapsed time after the liquid tank is filled with the ink, and the printing density are exemplified as the operating environment, but the operating environment is not particularly limited as long as the amount of dissolved air (oxygen saturation) in the ink is a predictable parameter.

In the present embodiment, the sheet may be a sheet-like object to form an image, for example, a plain paper, a coated paper, a tracing paper, or an OHP (Over Head Projector) sheet.

Although the present embodiment has been described, other embodiments may be wholly or partially combined with the above-described embodiments and modified examples.

The technique of the present invention is not limited to the above-described embodiments, and may be changed, replaced, or modified in various ways to the extent that it does not deviate from the purport of the technical idea. In addition, if the technical ideas can be realized in other ways by means of technological advances or other derived technologies, they may be implemented using those methods. Accordingly, the claims cover all embodiments that can be included within the scope of the technical thought.

**Claims**

1. A degassing device (40) which removes air dissolved in a liquid under a reduced pressure atmosphere, the degassing device (40) comprising:

   a liquid tank (32) in which the liquid is stored;
   a pressure reducing device (62) which reduces pressure in the liquid tank (32);
   a circulation flow path (47) which connects different positions of the liquid tank (32);
   a circulation device (67) which circulates the liquid through the circulation flow path (47); and
   a control device (38) which controls a circulation operation by the circulation device (67), wherein
   the control device (38) adjusts a circulation time of the liquid based on an amount of dissolved air in the liquid.

2. The degassing device (40) according to claim 1, wherein
   the control device (38) predicts the amount of dissolved air in the liquid from an operating environment, and adjusts the circulation time of the liquid based on a predicted value of the amount of dissolved air in the liquid.

3. The degassing device (40) according to claim 2, wherein
the control device (38) adjusts the circulation time of the liquid to be shorter when the predicted value of the amount of dissolved air in the liquid becomes lower.

4. The degassing device (40) according to claim 3, wherein

the liquid is an ink used for printing on a sheet, and
the control device (38) predicts the amount of dissolved air in the ink based on at least one of an environmental temperature, an environmental pressure, an elapsed time after the liquid tank is filled with the ink, and a printing density as the operating environment.

5. The degassing device (40) according to claim 4, wherein
the control device (38) predicts the amount of dissolved air to be lower as the environmental temperature or the environmental air pressure become lower, predicts the amount of dissolved air to be lower as the elapsed time after the ink tank is filled with the ink becomes shorter, and predicts the amount of dissolved air to be lower as the printing density becomes higher.

6. The degassing device (40) according to claim 1, comprising:

a sensor (69) which measures the amount of dissolved air in the liquid, wherein
the control device (38) adjusts the circulation time of the liquid based on an actual measurement value of the amount of dissolved air in the liquid.

7. The degassing device (40) according to claim 6, wherein
the sensor (69) is disposed in the circulating flow path (47).

8. The degassing device (40) according to claim 1, comprising:

a sensor (69) which measures the amount of dissolved air in the liquid, wherein
the control device (38) predicts the amount of dissolved air in the liquid based on a coefficient corresponding to an operating environment, and adjusts the circulation time of the liquid based on a predicted value of the amount of dissolved air, and
the control device (38) corrects the coefficient by comparing the predicted value of the amount of dissolved air in the liquid with a measured value of the amount of dissolved air in the liquid.

9. An inkjet recording apparatus (1) comprising:

the degassing device (40) according to claim 1; and
a recording head (21) which ejects a degassed ink as the liquid to a sheet.

# FIG. 1

# FIG. 2

# FIG. 3

# FIG. 4

# FIG. 5
related art

# FIG. 6

DEGASSING TIME

OXYGEN SATURATION

- - - - STIRRING DEGASSING SYSTEM

——— CIRCULATION DEGASSING SYSTEM

-·-·-·- TARGET VALUE

# FIG. 7

START

S01
POWER ON OR
RETURN FROM SLEEP STATE

S02
PREDICT OXYGEN SATURATION

S03
PREDICTED VALUE OF
OXYGEN SATURATION $\geqq m2$ ?

No →

S05
PREDICTED VALUE OF
OXYGEN SATURATION $\geqq m1$ ?

No

Yes

S04
DEGASSING OPERATING
FOR LONG TIME

Yes

S06
DEGASSING OPERATING
FOR SHORT TIME

S07
WAITING

END

# FIG. 8

# FIG. 9

## INTERNATIONAL SEARCH REPORT

| International application No. |
|---|
| **PCT/JP2024/018074** |

| A. | CLASSIFICATION OF SUBJECT MATTER |
|---|---|

*B41J 2/19*(2006.01)i; *B01D 19/00*(2006.01)i; *B41J 2/01*(2006.01)i; *B41J 2/18*(2006.01)i; *B41J 2/175*(2006.01)i
FI:  B41J2/19; B41J2/01 401; B41J2/18; B41J2/175 501; B01D19/00 101; B41J2/01 451

According to International Patent Classification (IPC) or to both national classification and IPC

| B. | FIELDS SEARCHED |
|---|---|

Minimum documentation searched (classification system followed by classification symbols)

B41J2/01-2/215; B01D19/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 10-225601 A (TOPPAN FORMS CO., LTD.) 25 August 1998 (1998-08-25)<br>entire text, all drawings | 1-9 |
| A | JP 2004-237264 A (MIURA KOGYO KK) 26 August 2004 (2004-08-26)<br>entire text, all drawings | 1-9 |
| A | JP 7-155505 A (JAPAN FIELD KK) 20 June 1995 (1995-06-20)<br>entire text, all drawings | 1-9 |
| A | JP 5-115704 A (OSAKA GAS CO., LTD.) 14 May 1993 (1993-05-14)<br>entire text, all drawings | 1-9 |
| A | JP 2020-59133 A (CANON KABUSHIKI KAISHA) 16 April 2020 (2020-04-16)<br>entire text, all drawings | 1-9 |
| A | US 2018/0290448 A1 (HEWLETT-PACKARD DEVELOPMENT COMPANY, L. P.) 11 October 2018 (2018-10-11)<br>entire text, all drawings | 1-9 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/018074**

| C. | DOCUMENTS CONSIDERED TO BE RELEVANT | |
|---|---|---|
| Category* | Citation of document, with indication, where appropriate, of the relevant passages | Relevant to claim No. |
| A | EP 2093065 A1 (PALUMBO, Vincenzo) 26 August 2009 (2009-08-26)<br>entire text, all drawings | 1-9 |

Form PCT/ISA/210 (second sheet) (July 2022)

| INTERNATIONAL SEARCH REPORT<br>Information on patent family members | | International application No.<br>**PCT/JP2024/018074** | |

**INTERNATIONAL SEARCH REPORT**
**Information on patent family members**

International application No.

**PCT/JP2024/018074**

| Patent document<br>cited in search report | Publication date<br>(day/month/year) | Patent family member(s) | Publication date<br>(day/month/year) |
|---|---|---|---|
| JP 10-225601 A | 25 August 1998 | (Family: none) | |
| JP 2004-237264 A | 26 August 2004 | (Family: none) | |
| JP 7-155505 A | 20 June 1995 | (Family: none) | |
| JP 5-115704 A | 14 May 1993 | (Family: none) | |
| JP 2020-59133 A | 16 April 2020 | US 2020/0108629 A1<br>entire text, all drawings<br>US 2021/0276340 A1<br>US 2023/0234370 A1<br>JP 2023-17082 A | |
| US 2018/0290448 A1 | 11 October 2018 | WO 2017/111908 A1<br>entire text, all drawings<br>EP 3337665 A1<br>CN 108349255 A | |
| EP 2093065 A1 | 26 August 2009 | (Family: none) | |

Form PCT/ISA/210 (patent family annex) (July 2022)

**REFERENCES CITED IN THE DESCRIPTION**

**Patent documents cited in the description**

- JP 5030305 B
- JP 2019142189 A